# EUROPÄISCHE PATENTSCHRIFT

(11) **EP 3 143 483 B1**
(45) Veröffentlichungstag und Bekanntmachung des Hinweises auf die Patenterteilung: **10.06.2020**
(21) Anmeldenummer: 15741898.9
(22) Anmeldetag: 01.04.2015
(51) Int. Cl.: G06F 3/0482, G06F 3/0488

(54) **BEDIENVERFAHREN UND BEDIENSYSTEM IN EINEM FAHRZEUG**
OPERATING METHOD AND OPERATING SYSTEM IN A VEHICLE
PROCÉDÉ DE COMMANDE ET SYSTÈME DE COMMANDE DANS UN VÉHICULE

(30) Priorität: 13.05.2014 DE 102014208979; 16.07.2014 DE 102014213821
(43) Veröffentlichungstag der Anmeldung: 22.03.2017
(73) Patentinhaber: Volkswagen Aktiengesellschaft, 38440 Wolfsburg (DE)
(72) Erfinder: BUDZYNSKI, Tobias, 13503 Berlin (DE); MICHAELIS, Jan, 14193 Berlin (DE); JUN, Mi-Ran, 10965 Berlin (DE); PETERSEN, Sönke, 12205 Berlin (DE)
(86) Internationale Anmeldenummer: PCT/EP2015/057195
(87) Internationale Veröffentlichungsnummer: WO 2015/172939

(56) Entgegenhaltungen:
- EP-A1- 2 631 760
- EP-A1- 2 687 964
- US-B1- 7 263 668

## Beschreibung

Die vorliegende Erfindung betrifft ein Bedienverfahren und ein Bediensystem in einem Fahrzeug.

Ursprünglich wurden die verschiedenen in einem Kraftfahrzeug vorgesehenen Einrichtungen über separate Bedienelemente bedient. Beispielsweise gab es Drehschalter zum Einstellen der Lüftung sowie der Temperatur, Schalter zum Einstellen der verschiedenen Lüftungsdüsen, Schalter zum Bedienen der Beleuchtungseinrichtungen für den Innenraum des Fahrzeugs, entsprechende Schalter für die Beleuchtungs- und Scheinwerfereinrichtungen außen am Fahrzeug und Bedienelemente für ein Radio oder einen CD-Spieler. Bei modernen Kraftfahrzeugen sind mittlerweile so viele Einrichtungen zum Einstellen verschiedener Fahrzeugfunktionen, Informationssysteme, einschließlich Fahrerassistenzsysteme und Unterhaltungssysteme, vorgesehen, dass es nicht mehr zweckmäßig ist, für alle Fahrzeugeinrichtungen separate Bedienelemente vorzusehen. Aus diesem Grund erfolgt die Bedienung der vielfältigen Fahrzeugeinrichtungen über ein einheitliches Bedienkonzept mit wenigen Bedienelementen, die in Verbindung mit einer Anzeigevorrichtung bedient werden.

Die Bedienung der verschiedenen Einrichtungen des Fahrzeugs und die Aufnahme der angezeigten Informationen, die von diesen Einrichtungen geliefert werden, sollen jedoch die Aufmerksamkeit des Fahrers des Straßenfahrzeugs so wenig wie möglich beanspruchen. Es ist daher wünschenswert, die Informationen im Straßenfahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann. Die Art der Bedienung und die mit der Bedienung verbundene Informationsdarstellung in einem Straßenfahrzeug tragen somit zur Sicherheit beim Führen dieses Fahrzeugs bei.

Aus der DE 10 2007 029 602 A1 ist ein Verfahren und eine Vorrichtung zum Bedienen in einer in einem Fahrzeug befindlichen Einrichtung bekannt. Bei dem in dieser Druckschrift beschriebenen Verfahren werden vor einem Mitfahrer des Fahrzeugs auf eine Projektionsfläche die Bedienfelder und die Anzeige einer Einrichtung im Fahrzeug projiziert und die Benutzereingaben erfasst. Entsprechend umfasst die Vorrichtung eine Projektionseinrichtung und mindestens eine Projektionsfläche, die mit optischen oder drucksensitiven Sensoren zur Erfassung von Benutzereingaben ausgestattet ist, die zu einer Einrichtung im Fahrzeug übertragen werden.

Aus der DE 10 2008 023 405 A1 ist ein Kraftfahrzeug und ein Display zur Darstellung veränderlicher Informationen und einem räumlich getrennt von dem Display angeordneten Bedienfeld mit zumindest zwei Bedienelementen zur Bedienung zumindest je einer Funktion des Kraftfahrzeugs bekannt. In diesem Fall umfasst das Kraftfahrzeug eine Anzeigesteuerung zur Anzeige eines in Abhängigkeit von der Ausrichtung einer Hand eines Bedieners zu dem Bedienfeld ausgerichteten Abbildes des Bedienfeldes in einem mittels des Displays abgebildeten Displaybereich.

Aus der DE 10 2006 043 208 A1 ist ein Touchscreen bekannt, der eine sensitive Bedienfläche zum Einstellen bestimmter Funktionen aufweist. Um die Bedienung zu vereinfachen, ist wenigstens ein mechanisches Stellelement über der sensitiven Bedienfläche angeordnet, das einen Auslöser aufweist, der bei einem Bewegen des Stellelements auf die sensitive Bedienfläche zur Funktionseinstellung einwirkt.

Aus der DE 10 2007 052 343 A1 ist ein Verfahren zum Anzeigen von Daten in einem Fahrzeug bekannt, bei dem in einem ersten Anzeigebereich einer Anzeigevorrichtung Informationen dargestellt werden, die Einrichtungen des Fahrzeugs betreffen, und in einem zweiten Anzeigebereich der oder einer weiteren Anzeigevorrichtung Prozesse visualisiert werden, die in Einrichtungen des Fahrzeugs ablaufen. In diesem Fall ist der erste Anzeigebereich im primären Sichtbereich des Fahrers des Fahrzeugs angeordnet. Der zweite Anzeigebereich ist hingegen außerhalb des primären Sichtbereichs des Fahrers angeordnet. Er ist in Reichweite des Fahrers angeordnet. Die Anzeigevorrichtung, welche diesen Anzeigebereich bereitstellt, ist insbesondere als Touchscreen ausgestaltet, d. h. es ist eine berührungsempfindliche Oberfläche vorgesehen. Schließlich ist in Reichweite des Fahrers noch ein separates mechanisches Bedienelement vorgesehen, wie z. B. ein Dreh-Drück-Schalter.

Schließlich ist aus der gattungsbildenden EP 2 631 760 A1 ein Verfahren bekannt, bei dem eine Vielzahl von Objekten, beispielsweise E-Mails oder Bilder, angezeigt werden. Nach dem Auswählen eines Objekts wird am Rand des Displays eine Spalte mit Symbolen für verschiedene Befehle angezeigt. Diese Spalte überdeckt bereits die angezeigten Objekte teilweise. Durch eine Wischgeste oder durch Betätigen einer dafür vorgesehenen Schaltfläche kann die Spalte vergrößert werden. Die angezeigten Objekte werden dadurch noch weiter überdeckt oder können - um diese Überdeckung zu verhindern - neu angeordnet werden.

Es ist die Aufgabe der vorliegenden Erfindung, ein Bedienverfahren und ein Bediensystem der eingangs genannten Art bereitzustellen, die eine einfache, schnelle und intuitive Bedienung und Informationsaufnahme in einem Fahrzeug ermöglicht.

Erfindungsgemäß wird diese Aufgabe durch ein Bedienverfahren mit den Merkmalen des Anspruchs 1 und ein Bediensystem mit den Merkmalen des Anspruchs 7 gelöst. Vorteilhafte Ausgestaltungen und Weiterbildungen ergeben sich aus den abhängigen Ansprüchen.

Bei dem erfindungsgemäßen Bedienverfahren wird auf einer Anzeigefläche zumindest ein erstes Fenster vollständig angezeigt. Dabei umfasst das vollständig angezeigte erste Fenster einen ersten Anzeigeinhalt, welcher erste graphische Objekte und erste Textfelder umfasst. Weiterhin wird zumindest ein zweites Fenster angeschnitten angezeigt. Dabei umfasst das zweite Fenster einen zweiten Anzeigeinhalt, welcher dem ersten Anzeigeinhalt zugeordnet ist und welcher zweite graphische Objekte oder zweite Textfelder umfasst. Es wird eine erste Bedienaktion erfasst, mittels welcher das zweite Fenster zur vollständigen Anzeige gebracht wird. Gleichzeitig wird das erste Fenster zu einer angeschnittenen Anzeige gebracht. Der erste Anzeigeinhalt wird in der angeschnittenen Anzeige des ersten Fensters derart reduziert, dass nur noch die ersten graphischen Objekte angezeigt werden.

Unter einer angeschnittenen Anzeige wird dabei verstanden, dass das Fenster nicht mehr vollständig angezeigt wird. Vielmehr wird die Größe des angeschnitten angezeigten Fensters reduziert. Um zu vermeiden, dass graphische Objekte des ersten Anzeigeinhalts nur noch teilweise angezeigt werden oder dass die graphischen Objekte verkleinert werden müssen, werden in der angeschnittenen Anzeige des ersten Fensters die Textfelder nicht mehr angezeigt. Dadurch wird dem Nutzer die Informationsaufnahme erleichtert.

Erfindungsgemäß wird der zweite Anzeigeinhalt in der vollständigen Anzeige des zweiten Fensters derart erweitert, dass die zweiten graphischen Objekte und die zweiten Textfelder angezeigt werden. Dies bedeutet, dass Teile des zweiten Anzeigeinhalts, die in der angeschnittenen Anzeige nicht angezeigt wurden, in der vollständigen Anzeige angezeigt werden. Dadurch kann der auf der Anzeigefläche zur Verfügung stehende Platz optimal ausgenutzt werden.

Insbesondere umfassen die ersten graphischen Objekte und/oder die ersten Textfelder erste betätigbare Schaltflächen und/oder die zweiten graphischen Objekte und/oder die zweiten Textfelder zweite betätigbare Schaltflächen, wobei die ersten und/oder die zweiten Schaltflächen in einer angeschnittenen Anzeige des ersten bzw. des zweiten Fensters betätigbar sind.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen Einrichtungen gesteuert werden, deren Bedienung von der Informationsanzeige unterstützt wird. Die Schaltflächen können somit herkömmliche mechanische Schalter ersetzen. Die Schaltflächen können beliebig für eine frei programmierbaren Anzeigefläche erzeugt und von dieser angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Erst bei einer Auswahl der Schaltfläche wird die ihr zugeordnete Funktion ausgeführt.

Weiterhin wird zwischen der ersten Bedienaktion und einer zweiten Bedienaktion unterschieden, wobei mit der zweiten Bedienaktion Schaltflächen in einem angeschnitten angezeigten Fenster ausgewählt werden. Dadurch können die Schaltflächen in dem angeschnittenen Fenster betätigt werden, ohne dass gleichzeitig das angeschnitten angezeigte Fenster in eine vollständige Anzeige wechselt.

Die erste und/oder die zweite Bedienaktion wird dabei beispielsweise über eine Berührung einer berührungsempfindlichen Oberfläche erfasst, wobei die erste Bedienaktion als Berührung der berührungsempfindlichen Oberfläche an einem Berührungspunkt in dem angeschnitten angezeigten Fenster erfasst wird, wobei der Berührungspunkt nicht an einer Position einer der Schaltflächen erfasst wird, und die zweite Bedienaktion als Berührung der berührungsempfindlichen Oberfläche an einer Position einer der Schaltflächen erfasst wird. Die Anzeigefläche ist also insbesondere als Touch-Screen ausgestaltet. Weiterhin sollte der Berührungspunkt der ersten Bedienaktion nicht an einer Position auf dem Touch-Screen sein, an dem sich eine Schaltfläche befindet. Dann nämlich wird die Berührung als zweite Bedienaktion erkannt. Dadurch wird gewährleistet, dass eine Bedienung der Schaltflächen nicht zu einem Wechsel der Anzeige des Fensters, in welchem sich die Schaltfläche befindet, führt, sondern dazu führt, dass eine der Schaltflächen ausgewählt wird.

Erfindungsgemäß umfassen die ersten graphischen Objekte erste Schaltflächen zum Auswählen von Listen und die ersten Textfelder Informationen zu den Listen, wobei eine der ersten Schaltflächen vorausgewählt ist. Ferner umfassen die zweiten graphischen Objekte zweite Schaltflächen zum Auswählen von Listeneinträgen, welche der vorausgewählten Schaltfläche zugeordnet sind. Wenn die erste Bedienaktion erfasst wurde, werden in dem ersten Fenster nur mehr die ersten Schaltflächen angezeigt und in dem zweiten Fenster werden die zweiten Schaltflächen und die zweiten Textfelder mit Informationen zu den Listeneinträgen angezeigt. Dabei wird dem Nutzer vorteilhafterweise ständig eine Einbettung aller Schaltflächen in einen Bedienpfad angezeigt.

Weiterhin kann die zweite Bedienaktion für eine der ersten Schaltflächen erfasst werden, wobei die Liste ausgewählt wird, welche der Schaltfläche zugeordnet ist, für welche die zweite Bedienaktion erfasst worden ist. Nach dem Erfassen der zweiten Bedienaktion werden die zweiten Schaltflächen derart verändert, dass sie Listeneinträge der ausgewählten Liste repräsentieren. Dadurch kann über eine einfache Bedienaktion in einem angeschnitten angezeigten Fenster der Anzeigeinhalt in einem vollständig angezeigten Fenster verändert werden.

Weiterhin können auf der Anzeigefläche auch mehrere angeschnittene Fenster angezeigt werden. Dadurch kann insbesondere ein Bedienmenü mit mehreren Hierarchieebenen angezeigt werden. Dabei ist eine Bedienung des Menüs in jedem der angeschnittenen Fenster möglich. Der Nutzer erhält so auf intuitive Weise Überblick darüber, wo er sich in dem Menü befindet. Zudem kann er auf schnelle Weise einen anderen Menüpunkt auswählen, ohne davor in dem Menü navigieren zu müssen.

Das erfindungsgemäße Bediensystem umfasst eine Anzeigefläche, auf der zumindest ein erstes Fenster vollständig anzeigbar ist, wobei das erste vollständig anzeigbare Fenster einen ersten Anzeigeinhalt umfasst, welcher erste graphische Objekte und erste Textfelder umfasst, und auf der zumindest ein zweites Fenster angeschnitten anzeigbar ist, wobei das zweite Fenster einen zweiten Anzeigeinhalt umfasst, welcher dem ersten Anzeigeinhalt zugeordnet ist und welcher zweite graphische Objekte oder zweite Textfelder umfasst. Dabei umfassen die ersten graphischen Objekte erste Schaltflächen zum Auswählen von Listen und die ersten Textfelder Informationen zu den Listen, wobei eine der ersten Schaltflächen vorausgewählt ist. Ferner umfassen die zweiten graphischen Objekte zweite Schaltflächen zum Auswählen von Listeneinträgen, welche der vorausgewählten Schaltfläche zugeordnet sind. Weiterhin umfasst das Bediensystem eine Erfassungseinheit, mittels welcher eine erste Bedienaktion erfassbar ist, wobei mit der erste Bedienaktion das zweite Fenster zu einer vollständigen Anzeige bringbar ist und gleichzeitig das erste Fenster zu einer angeschnittenen Anzeige bringbar ist. Die Erfassungseinheit ist ausgebildet, in dem ersten Fenster nur mehr die ersten Schaltflächen anzuzeigen und in dem zweiten Fenster die zweiten Schaltflächen und die zweiten Textfelder mit Informationen zu den Listeneinträgen anzuzeigen, wenn die erste Bedienaktion erfasst wurde. Eine Steuervorrichtung ist mit der Anzeigefläche gekoppelt, mittels welcher der erste Anzeigeinhalt in der angeschnittenen Anzeige des ersten Fensters derart reduzierbar ist, dass nur noch die ersten graphischen Objekte anzeigbar sind. Das erfindungsgemäße Bediensystem ist insbesondere zum Ausführen des erfindungsgemäßen Verfahrens geeignet und weist daher alle Vorteile des Verfahrens auf.

Die Erfassungseinheit ist dabei insbesondere eine auf der Anzeigefläche angeordnete berührungsempfindliche Oberfläche. Die Anzeigefläche stellt also einen Touch-Screen bereit, mittels welchem eine einfache und intuitive Bedienung möglich ist.

Die Erfindung betrifft schließlich ein Fahrzeug mit einem solchen Bediensystem. Das Bediensystem ist insbesondere in einem Kraftfahrzeug vorgesehen.

Die Erfindung wird nun anhand eines Ausführungsbeispiels mit Bezug zu den Zeichnungen erläutert.
- Figur 1: zeigt schematisch ein Ausführungsbeispiel des erfindungsgemäßen Bediensystems sowie ein Beispiel einer Anordnung desselben in einem Fahrzeug und
- Figuren 2a und 2b: zeigen Anzeigen auf den Anzeigeflächen des Bediensystems, die von einem ersten Ausführungsbeispiel des erfindungsgemäßen Verfahrens erzeugt werden.

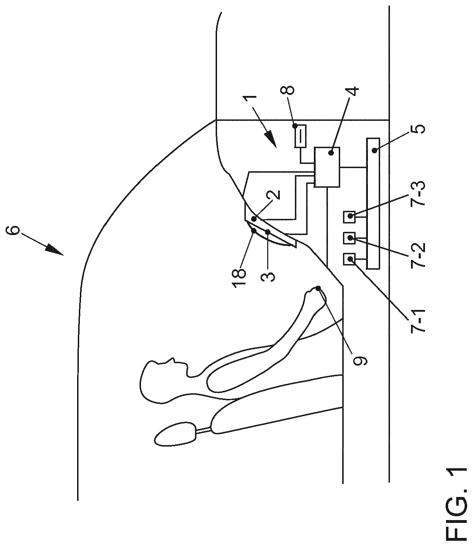

Zunächst wird der prinzipielle Aufbau des erfindungsgemäßen Bediensystems 1 mit Bezug zu Figur 1 erläutert:
Das Bediensystem 1 umfasst eine zentrale Steuereinheit 4. Diese ist mit einer Anzeigevorrichtung 2 gekoppelt, welche eine Anzeigefläche 3 aufweist. Die Steuereinheit 4 erzeugt Graphikdaten, die auf der Anzeigefläche 3 angezeigt werden können. Die Anzeigefläche 3 kann von einem Display, insbesondere einem Flüssigkristalldisplay oder einem Plasmadisplay, beliebiger Bauart bereitgestellt werden. Ferner kann die Anzeigefläche 3 von einem Display mit organischen Leuchtdioden bereitgestellt werden. Die Anzeigefläche 3 kann dabei entweder eben oder gewölbt ausgeführt sein.

Die Anzeigefläche 3 umfasst eine berührungsempfindliche Oberfläche 18, welche als Erfassungseinheit dient, so dass ein so genannter Touchscreen bereitgestellt wird, insbesondere ein kapazitiver oder ein resistiver Touchscreen. Die berührungsempfindliche Oberfläche 18 kann dabei insbesondere Bedienaktionen erfassen.

Die Steuereinheit 4 ist ferner mit einem Datenbus 5 des Fahrzeugs 6 gekoppelt. Die Einrichtungen 7-1, 7-2, 7-3 des Fahrzeugs 6, welche mittels der Anzeigevorrichtung 2 bedient werden sollen, sind auch mit diesem Datenbus 5 gekoppelt. Beispielsweise kann ein Navigationssystem 7-1, ein Multimediasystem 7-2 und eine Telekommunikationseinrichtung 7-3 vorgesehen sein. Ferner ist es auch möglich, dass die Fahrzeugeinrichtungen 7-1, 7-2 und 7-3 direkt mit der Steuereinheit 5 gekoppelt sind. Von den Fahrzeugeinrichtungen 7-1, 7-2 und 7-3 werden Daten gegebenenfalls über den Datenbus 5 an die Steuereinheit 4 übertragen. Dort werden die Daten verarbeitet. Es werden ferner Graphikdaten erzeugt, die auf der Anzeigefläche 3 der Anzeigevorrichtung 2 graphisch wiedergegeben werden. Dabei werden auf der Anzeigefläche 3 Informationen angezeigt, die in direkter Verbindung mit der Bedienung über die berührungsempfindliche Oberfläche 18 auf der Anzeigefläche 3 oder über weitere Bedienelemente stehen.

Schließlich ist die Steuereinheit 4 mit einem Speicher 8 verbunden, aus welchem Daten ausgelesen werden können. Auf dem Speicher 8 können vielfältige Daten, die für die Verarbeitung der von der Steuereinheit 4 empfangenen Daten erforderlich sind, gespeichert sein.

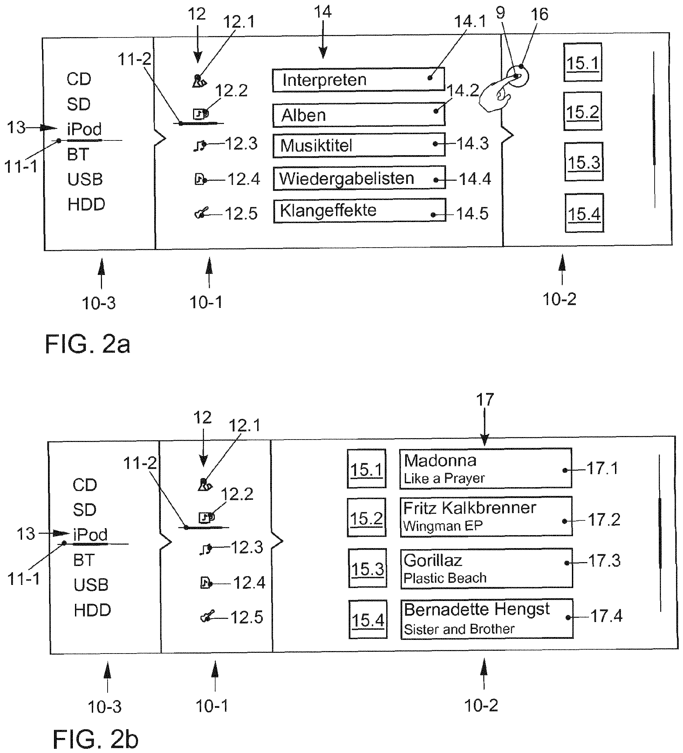

Im Folgenden wird ein Ausführungsbeispiel des erfindungsgemäßen Bedienverfahrens mit Bezug zu den Figuren 2a und 2b erläutert.

Dabei sind Beispiele für Anzeigen auf der Anzeigefläche 3 angezeigt, welche dem Multimediasystem 7-2 zugeordnet sind. Es wird eine Darstellung mit drei Fenstern 10-1 bis 10-3 wiedergegeben, wobei zwei Fenster 10-1 und 10-3 angeschnitten dargestellt sind. Jedes Fenster 10-1 bis 10-3 stellt dabei eine Menüebene des Multimediasystems 7-2 dar. In dem Fenster 10-3 ist eine erste Menüebene dargestellt. In der ersten Menüebene kann der Nutzer über verschiedene Schaltflächen 13 auswählen, welches Mediensystem er verwenden möchte. Im vorliegenden Beispiel hat der Nutzer ein extern angeschlossenes Mediensystem ausgewählt. Dies wird dem Nutzer dadurch angezeigt, dass der ausgewählte Menüpunkt durch die Markierung 11-1 hervorgehoben dargestellt wird. Das Fenster 10-3 ist dabei angeschnitten dargestellt.

Im Fenster 10-1, welches vollständig angezeigt wird, ist die zweite Menüebene geöffnet dargestellt. In der zweiten Menüebene werden graphische Objekte 12, welche als betätigbare Schaltflächen 12.1 bis 12.5 ausgebildet sind, angezeigt. Neben den graphischen Objekte 12 werden Textfelder 14 angezeigt. Die Textfelder 14 können dabei ebenfalls als betätigbare Schaltflächen 14.1 bis 14.5 ausgebildet sein. In den Textfeldern 14 finden sich Informationen, welche die unterschiedlichen Menüpunkte der Menüebene, welche in dem Fenster 10-1 angezeigt wird, beschreibt.

Durch die Auswahl einer der Schaltflächen 12.1 bis 12.5 oder 14.1 bis 14.5 kann dabei der Anzeigeinhalt in dem angeschnitten angezeigten Fenster 10-2 verändert werden.

Im angeschnitten angezeigten Fenster 10-2 werden graphische Objekte 15 angezeigt, welche einer in dem Fenster 10-1 vorausgewählten Schaltfläche 12.2 zugeordnet sind. Dabei kann die vorausgewählte Schaltfläche 12.2 beispielsweise den zuletzt ausgewählten Menüpunkt repräsentieren.

Berührt der Nutzer nun mit seiner Fingerspitze 9 das Fenster 10-2 an einer beliebigen Stelle, beispielsweise dem Berührungspunkt 16, wird eine Bedienaktion erkannt, mittels welcher veranlasst wird, dass das Fenster 10-2 von der angeschnittenen Anzeige in eine vollständige Anzeige wechselt. Dies ist in Figur 2b dargestellt.

Dabei wird der Anzeigeinhalt des Fensters 10-2 derart erweitert, dass neben den graphischen Objekten 15, welche in der angeschnittenen Anzeige des Fensters 10-2 angezeigt werden, Textfelder 17 angezeigt werden, welche die graphischen Objekte 15 erläutern. Handelt es sich bei den Menüpunkten im Fenster 10-2 beispielsweise um Musikalben, so können die graphischen Objekte 15 als Albumcover ausgebildet sein, während in den Textfeldern 17 die Albumtitel wiedergegeben werden. Die graphischen Objekte 15 können auch als Schaltflächen 15.1 bis 15.4 ausgebildet sein, so dass durch eine Betätigung eines graphischen Objekts ein Album ausgewählt werden kann. Auch die zugehörigen Textfelder 17 können als Schaltflächen 17.1 bis 17.4 ausgebildet sein.

Gleichzeitig wechselt das vollständig angezeigte Fenster 10-1 von der vollständigen Anzeige in eine angeschnittene Anzeige.

Dabei wird der Anzeigeinhalt des Fensters 10-1, der in der vollständigen Anzeige die graphischen Objekte 12 und die Textfelder 14 umfasst, derart reduziert, dass nur noch die graphischen Objekte 12 angezeigt werden, während die Textfelder nicht mehr angezeigt werden. Weiterhin wird der Menüpunkt, dessen Listeneinträge im Fenster 10-2 angezeigt werden, durch die Markierung 11-2 hervorgehoben dargestellt.

Die graphischen Objekte 12 bleiben dabei als die Schaltflächen 12.1 bis 12.5 auch in der angeschnittenen Anzeige des Fensters 10-1 betätigbar. Dies bedeutet, dass der Menüpunkt, dessen Listeneinträge in dem Fenster 10-2 angezeigt werden, durch Berühren einer Schaltfläche 12.1 bis 12.5 in dem Fenster 10-1 geändert werden kann.

Die berührungsempfindliche Oberfläche 18 unterscheidet dazu zwischen einer Berührung eines graphischen Objekts 12.1 bis 12.5 und einer allgemeinen Berührung des Fensters 10-1 an einem Berührungspunkt, welcher nicht an einer Position einer der Schaltflächen 12.1 bis 12.5 liegt.

Gleiches gilt auch für das Fenster 10-2 und die darin angeordneten Schaltflächen 15.1 bis 15.4.

Auf diese Weise wird von dem erfindungsgemäßen Verfahren eine intuitive Darstellung des Bedienpfads erzeugt. Ferner ist es möglich zwischen verschiedenen Anzeigehierarchien durch direkte Bedienung hin und her zu springen. Schließlich werden verschiedene Bedienhierarchien übersichtlich dargestellt.

Auch die anderen Fahrzeugfunktionen 7-1 und 7-3 können über die vorstehend beschriebenen Verfahren bedient werden. Es kann also mit dem Verfahren durch ein Menü eines Navigationssystems 7-1 oder durch ein Menü einer Telekommunikationseinrichtung 7-3 navigiert werden.

### BEZUGSZEICHENLISTE

- 1: Bediensystem
- 2: Anzeigevorrichtung
- 3: Anzeigefläche
- 4: Steuervorrichtung
- 5: Datenbus
- 6: Fahrzeug
- 7-1 - 7-3: Fahrzeugfunktionen
- 8: Speicher
- 9: Fingerspitze
- 10-1 - 10-3: Fenster
- 11-1, 11-2: Markierung
- 12: graphische Objekte
- 12.1 - 12.5: Schaltflächen
- 13: Schaltflächen
- 14: Textfelder
- 14.1 - 14.5: Schaltflächen
- 15: graphische Objekte
- 15.1 - 15.4: Schaltflächen
- 16: Berührungspunkt
- 17: Textfelder
- 17.1 - 17.4: Schaltflächen
- 18: Erfassungseinheit; berührungsempfindliche Oberfläche

## Patentansprüche

1. Bedienverfahren in einem Fahrzeug (6), bei dem
- auf einer Anzeigefläche (3) zumindest ein erstes Fenster (10-1) vollständig angezeigt wird, wobei das vollständig angezeigte erste Fenster (10-1) einen ersten Anzeigeinhalt umfasst,
- zumindest ein zweites Fenster (10-2) angeschnitten angezeigt wird, wobei das zweite Fenster (10-2) einen zweiten Anzeigeinhalt umfasst, welcher dem ersten Anzeigeinhalt zugeordnet ist und welcher zweite graphische Objekte (15) oder zweite Textfelder (17) umfasst, und
- eine erste Bedienaktion erfasst wird, mittels welcher das zweite Fenster (10-2) zur vollständigen Anzeige gebracht wird und gleichzeitig das erste Fenster (10-1) zu einer angeschnittenen Anzeige gebracht wird,
**dadurch gekennzeichnet, dass**
- der erste Anzeigeinhalt erste graphische Objekte (12) und erste Textfelder (14) umfasst, wobei
- die ersten graphischen Objekte (12) erste Schaltflächen (12.1 - 12.5) zum Auswählen von Listen und die ersten Textfelder (14) Informationen zu den Listen umfassen, wobei eine der ersten Schaltflächen (12.2) vorausgewählt ist,
- die zweiten graphischen Objekte (15) zweite Schaltflächen (15.1 - 15.4) zum Auswählen von Listeneinträgen umfassen, welche der vorausgewählten Schaltfläche (12.2) zugeordnet sind, und,
- wenn die erste Bedienaktion erfasst wurde, in dem ersten Fenster nur mehr die ersten Schaltflächen (12.1 - 12.5) angezeigt werden und in dem zweiten Fenster die zweiten Schaltflächen (15.1 - 15.4) und die zweiten Textfelder mit Informationen zu den Listeneinträgen angezeigt werden, wobei
- der erste Anzeigeinhalt in der angeschnittenen Anzeige des ersten Fensters (10-1) derart reduziert wird, dass nur noch die ersten graphischen Objekte (12) angezeigt werden.

2. Bedienverfahren nach Anspruch 1 ,
**dadurch gekennzeichnet, dass**
die ersten graphischen Objekte (12) und/oder die ersten Textfelder (14) erste betätigbare Schaltflächen (12.1 - 12.5, 14.1 - 14.5) und/oder die zweiten graphischen Objekte (15) und/oder die zweiten Textfelder (17) zweite betätigbare Schaltflächen (15.1 - 15.4, 17.1 - 17.4) umfassen, wobei die ersten (12.1 - 12-5, 14.1 - 14.5) und/oder die zweiten Schaltflächen (15.1 - 15.4, 17.1 - 17.4) in einer angeschnittenen Anzeige des ersten (10-1) bzw. des zweiten Fensters (10-2) betätigbar sind.

3. Bedienverfahren nach Anspruch 2,
**dadurch gekennzeichnet, dass**
zwischen der ersten Bedienaktion und einer zweiten Bedienaktion unterschieden wird, wobei mit der zweiten Bedienaktion die Schaltflächen (12.1 - 12.5, 15.1 - 15.4) in einem angeschnitten angezeigten Fenster (10-1, 10-2, 10-4) ausgewählt werden.

4. Bedienverfahren nach Anspruch 3,
**dadurch gekennzeichnet, dass**
die erste und/oder die zweite Bedienaktion über eine Berührung einer berührungsempfindlichen Oberfläche (18) erfasst wird, wobei die erste Bedienaktion als Berührung der berührungsempfindlichen Oberfläche (18) an einem Berührungspunkt (16) in dem angeschnitten angezeigten Fenster (10-1, 10-2) erfasst wird, wobei der Berührungspunkt (16) nicht an einer Position einer der Schaltflächen (12.1 - 12.5, 15.1 - 15.2) liegt, und die zweite Bedienaktion als Berührung der berührungsempfindlichen Oberfläche (18) an einer Position einer der Schaltflächen (12.1 - 12.5, 15.1 - 15.2) erfasst wird.

5. Bedienverfahren nach einem der vorhergehenden Ansprüche,
**dadurch gekennzeichnet, dass**
- die zweite Bedienaktion für eine der ersten Schaltflächen (12.1, 12.3 - 12.5) erfasst wird, wobei die Liste ausgewählt wird, welche der Schaltfläche (12.1, 12.3 - 12.5) zugeordnet ist, für welche die zweite Bedienaktion erfasst worden ist, und
- nach dem Erfassen der zweiten Bedienaktion die zweiten Schaltflächen (15.1 - 15.4) derart verändert werden, dass sie Listeneinträge der ausgewählten Liste repräsentieren.

6. Bedienverfahren nach einem der vorhergehenden Ansprüche,
**dadurch gekennzeichnet,**
**dass** auf der Anzeigefläche (3) mehrere angeschnittene Fenster (10-1, 10-2, 10-3) angezeigt werden.

7. Bediensystem (1) in einem Fahrzeug (6) mit
- einer Anzeigefläche (3), auf der zumindest ein erstes Fenster (10-1) vollständig anzeigbar ist, wobei das erste vollständig anzeigbare Fenster (10-1) einen ersten Anzeigeinhalt umfasst, und auf der zumindest ein zweites Fenster (10-2) angeschnitten anzeigbar ist, wobei das zweite Fenster (10-2) einen zweiten Anzeigeinhalt umfasst, welcher dem ersten Anzeigeinhalt zugeordnet ist und welcher zweite graphische Objekte (15) oder zweite Textfelder (17) umfasst, und
- einer Erfassungseinheit (18), mittels welcher eine erste Bedienaktion erfassbar ist, wobei mit der ersten Bedienaktion das zweite Fenster (10-2) zu einer vollständigen Anzeige bringbar ist und gleichzeitig das erste Fenster (10-1) zu einer angeschnittenen Anzeige bringbar ist,
**dadurch gekennzeichnet, dass**
- der erste Anzeigeinhalt erste graphische Objekte (12) und erste Textfelder (14) umfasst, wobei
- die ersten graphischen Objekte (12) erste Schaltflächen (12.1 - 12.5) zum Auswählen von Listen und die ersten Textfelder (14) Informationen zu den Listen umfassen, wobei eine der ersten Schaltflächen (12.2) vorausgewählt ist, und
- die zweiten graphischen Objekte (15) zweite Schaltflächen (15.1 - 15.4) zum Auswählen von Listeneinträgen umfassen, welche der vorausgewählten Schaltfläche (12.2) zugeordnet sind,
- die Erfassungseinheit (18) ausgebildet ist, in dem ersten Fenster nur mehr die ersten Schaltflächen (12.1 - 12.5) anzuzeigen und in dem zweiten Fenster die zweiten Schaltflächen (15.1 - 15.4) und die zweiten Textfelder mit Informationen zu den Listeneinträgen anzuzeigen, wenn die erste Bedienaktion erfasst wurde, und
- mittels einer Steuervorrichtung (4), die mit der Anzeigefläche (3) gekoppelt ist, der erste Anzeigeinhalt in der angeschnittenen Anzeige des ersten Fensters (10-1) derart reduzierbar ist, dass nur noch die ersten graphischen Objekte (12) anzeigbar sind.

8. Bediensystem (1) nach Anspruch 7,
**dadurch gekennzeichnet, dass**
die Erfassungseinheit (18) eine auf der Anzeigefläche (3) angeordnete berührungsempfindliche Oberfläche ist.

9. Fahrzeug (6) mit einem Bediensystem (1) nach einem der Ansprüche 7 oder 8.

## Claims

1. Operating method in a vehicle (6), in which
- at least one first window (10-1) is displayed in full on a display area (3), wherein the first window (10-1) displayed in full comprises a first display content,
- at least one second window (10-2) is displayed in a truncated manner, wherein the second window (10-2) comprises a second display content which is associated with the first display content and which comprises second graphical objects (15) or second text fields (17), and
- a first operating action is detected by means of which the second window (10-2) is displayed in full and the first window (10-1) is simultaneously displayed in a truncated manner,
**characterized in that**
- the first display content comprises first graphical objects (12) and first text fields (14), wherein
- the first graphical objects (12) comprise first buttons (12.1 - 12.5) for selecting lists and the first text fields (14) comprise information about the lists, wherein one of the first buttons (12.2) is preselected,
- the second graphical objects (15) comprise second buttons (15.1 - 15.4) for selecting list entries which are associated with the preselected button (12.2) and,
- if the first operating action has been detected, only the first buttons (12.1 - 12.5) continue to be displayed in the first window, and the second buttons (15.1 - 15.4) and the second text fields with information about the list entries are displayed in the second window, wherein
- the first display content in the truncated display of the first window (10-1) is reduced in such a way that only the first graphical objects (12) continue to be displayed.

2. Operating method according to Claim 1,
**characterized in that**
the first graphical objects (12) and/or the first text fields (14) comprise first operable buttons (12.1 - 12.5, 14.1 - 14.5) and/or the second graphical objects (15) and/or the second text fields (17) comprise second operable buttons (15.1 - 15.4, 17.1 - 17.4), wherein the first (12.1 - 12-5, 14.1 - 14.5) and/or the second buttons (15.1 - 15.4, 17.1 - 17.4) can be operated in a truncated display of the first (10-1) or the second window (10-2), respectively.

3. Operating method according to Claim 2,
**characterized in that**
a distinction is made between the first operating action and a second operating action, wherein the buttons (12.1 - 12.5, 15.1 - 15.4) in a window (10-1, 10-2, 10-4) displayed in a truncated manner are selected with the second operating action.

4. Operating method according to Claim 3,
**characterized in that**
the first and/or the second operating action is detected via a touch on a touch-sensitive surface (18), wherein the first operating action is detected as a touch on the touch-sensitive surface (18) at a contact point (16) in the window (10-1, 10-2) displayed in a truncated manner, wherein the contact point (16) is not at the position of one of the buttons (12.1 - 12.5, 15.1 - 15.2), and the second operating action is detected as a touch on the touch-sensitive surface (18) at the position of one of the buttons (12.1 - 12.5, 15.1 - 15.2).

5. Operating method according to any one of the preceding claims,
**characterized in that**
- the second operating action for one of the first buttons (12.1, 12.3 - 12.5) is detected, wherein the list is selected which is associated with the button (12.1, 12.3 - 12.5) for which the second operating action has been detected, and
- after detection of the second operating action, the second buttons (15.1 - 15.4) are changed such that they represent list entries of the selected list.

6. Operating method according to any one of the preceding claims,
**characterized in that**
a plurality of truncated windows (10-1, 10-2, 10-3) is displayed in the display area (3).

7. Operating system (1) in a vehicle (6) having
- a display area (3) in which at least one first window (10-1) can be displayed in full, wherein the first window (10-1) that can be displayed in full comprises a first display content, and in which at least one second window (10-2) can be displayed, wherein the second window (10-2) comprises a second display content which is associated with the first display content and which comprises second graphical objects (15) or second text fields (17), and
- a detection unit (18) by means of which a first operating action can be detected, wherein with the first operating action the second window (10-2) can be displayed in full and the first window (10-1) can simultaneously be displayed in a truncated manner,
**characterized in that**
- the first display content comprises first graphical objects (12) and first text fields (14), wherein
- the first graphical objects (12) comprise first buttons (12.1 - 12.5) for selecting lists and the first text fields (14) comprise information about the lists, wherein one of the first buttons (12.2) is preselected, and
- the second graphical objects (15) comprise second buttons (15.1 - 15.4) for selecting list entries which are associated with the preselected button (12.2),
- the detection unit (18) is designed to continue displaying only the first buttons (12.1 - 12.5) in the first window, and in the second window the second buttons (15.1 - 15.4) and the second text fields with information about the list entries, if the first operating action has been detected, and
- by means of a control device (4) which is coupled to the display area (3), the first display content in the truncated display of the first window (10-1) can be reduced in such a way that only the first graphical objects (12) can be displayed.

8. Operating system (1) according to Claim 7,
**characterized in that**
the detection unit (18) is a touch-sensitive surface arranged in the display area (3).

9. Vehicle (6) having an operating system (1) according to either of Claims 7 or 8.

## Revendications

1. Procédé d'utilisation dans un véhicule (6), dans lequel
- au moins une première fenêtre (10-1) est entièrement affichée sur une surface d'affichage (3), la première fenêtre entièrement affichée (10-1) comprenant un premier contenu d'affichage,
- au moins une deuxième fenêtre (10-2) est affichée tronquée, la deuxième fenêtre (10-2) comprenant un deuxième contenu d'affichage qui est affecté au premier contenu d'affichage et qui comprend des deuxièmes objets graphiques (15) ou des deuxièmes champs textuels (17), et
- une première action d'utilisation est détectée, au moyen de laquelle la deuxième fenêtre (10-2) est entièrement affichée et la première fenêtre (10-1) est simultanément affichée tronquée,
**caractérisé en ce que**
- le premier contenu d'affichage comprend des premiers objets graphiques (12) et des premiers champs textuels (14),
- les premiers objets graphiques (12) comprenant des premiers boutons (12.1 - 12.5) pour sélectionner des listes et les premiers champs textuels (14) comprenant des informations sur les listes, l'un des premiers boutons (12.2) étant présélectionné,
- les deuxièmes objets graphiques (15) comprennent des deuxièmes boutons (15.1 - 15.4) pour sélectionner des entrées de listes, lesquelles sont affectées au bouton présélectionné (12.2), et,
- lorsque la première action d'utilisation a été détectée, seuls les premiers boutons (12.1 - 12.5) sont affichés dans la première fenêtre et les deuxièmes boutons (15.1 - 15.4) et les deuxièmes champs textuels contenant des informations sur les entrées de listes sont affichés dans la deuxième fenêtre,
- le premier contenu d'affichage dans l'affichage tronqué de la première fenêtre (10-1) étant réduit de telle sorte que seuls les premiers objets graphiques (12) sont affichés.

2. Procédé d'utilisation selon la revendication 1,
**caractérisé en ce que**
les premiers objets graphiques (12) et/ou les premiers champs textuels (14) comprennent des premiers boutons pouvant être actionnés (12.1-12.5, 14.1-14.5) et/ou les deuxièmes objets graphiques (15) et/ou les deuxièmes champs textuels (17) comprennent des deuxièmes boutons pouvant être actionnés (15.1 -15.4, 17.1 - 17.4), les premiers (12.1 - 12-5, 14.1 - 14.5) et/ou les deuxièmes boutons (15.1 - 15.4, 17.1 - 17.4) pouvant être actionnés dans un affichage tronqué de la première (10-1) ou de la deuxième fenêtre (10-2).

3. Procédé d'utilisation selon la revendication 2,
**caractérisé en ce qu'**
une distinction est faite entre la première action d'utilisation et une deuxième action d'utilisation, la deuxième action d'utilisation permettant de sélectionner les boutons (12.1 - 12.5, 15.1 - 15.4) dans une fenêtre (10-1, 10-2, 10-4) affichée tronquée.

4. Procédé d'utilisation selon la revendication 3,
**caractérisé en ce que**
la première et/ou la deuxième action d'utilisation est/sont détectée(s) par effleurement d'une surface tactile (18), la première action d'utilisation étant détectée par effleurement de la surface tactile (18) au niveau d'un point de contact (16) situé dans la fenêtre affichée tronquée (10-1, 10-2), le point de contact (16) ne se trouvant pas dans une position de l'un des boutons (12.1 - 12.5, 15.1 - 15.2), et la deuxième action d'utilisation étant détectée par effleurement de la surface tactile (18) au niveau d'une position de l'un des boutons (12.1 - 12.5, 15.1 - 15.2).

5. Procédé d'utilisation selon l'une quelconque des revendications précédentes,
**caractérisé en ce que**
- la deuxième action d'utilisation est détectée pour l'un des premiers boutons (12.1, 12.3-12.5), la liste affectée au bouton (12.1, 12.3-12.5) pour lequel la deuxième action d'utilisation a été détectée étant sélectionnée, et
- après la détection de la deuxième action d'utilisation, les deuxièmes boutons (15.1 - 15.4) sont modifiés de manière à représenter des entrées de la liste sélectionnée.

6. Procédé d'utilisation selon l'une quelconque des revendications précédentes,
**caractérisé en ce que**
plusieurs fenêtres tronquées (10-1, 10-2, 10-3) sont affichées sur la surface d'affichage (3).

7. Système d'utilisation (1) dans un véhicule (6), comprenant
- une surface d'affichage (3), sur laquelle au moins une première fenêtre (10-1) peut être entièrement affichée, la première fenêtre pouvant être entièrement affichée (10-1) comprenant un premier contenu d'affichage, et sur laquelle au moins une deuxième fenêtre (10-2) peut être affichée tronquée, la deuxième fenêtre (10-2) comprenant un deuxième contenu d'affichage qui est affecté au premier contenu d'affichage et qui comprend des deuxièmes objets graphiques (15) ou des deuxièmes champs textuels (17), et
- une unité de détection (18), au moyen de laquelle une première action d'utilisation peut être détectée, la deuxième fenêtre (10-2) pouvant être entièrement affichée et la première fenêtre (10-1) pouvant simultanément être affichée tronquée au moyen de la première action d'utilisation,
**caractérisé en ce que**
- le premier contenu d'affichage comprend des premiers objets graphiques (12) et des premiers champs textuels (14),
- les premiers objets graphiques (12) comprenant des premiers boutons (12.1 - 12.5) pour sélectionner des listes et les premiers champs textuels (14) comprenant des informations sur les listes, l'un des premiers boutons (12.2) étant présélectionné, et
- les deuxièmes objets graphiques (15) comprenant des deuxièmes boutons (15.1 - 15.4) pour sélectionner des entrées de listes, lesquelles sont affectées au bouton présélectionné (12.2),
- l'unité de détection (18) est conçue pour afficher uniquement les premiers boutons (12.1 - 12.5) dans la première fenêtre et pour afficher les deuxièmes boutons (15.1 - 15.4) et les deuxièmes champs textuels contenant des informations sur les entrées de listes dans la deuxième fenêtre, lorsque la première action d'utilisation a été détectée, et
- au moyen d'un dispositif de commande (4), qui est couplé à la surface d'affichage (3), le premier contenu d'affichage peut être réduit dans l'affichage tronqué de la première fenêtre (10-1) de telle sorte que seuls les premiers objets graphiques (12) peuvent encore être affichés.

8. Système d'utilisation (1) selon la revendication 7,
**caractérisé en ce que**
l'unité de détection (18) est une surface tactile disposée sur la surface d'affichage (3).

9. Véhicule (6) comprenant un système d'utilisation (1) selon l'une quelconque des revendications 7 ou 8.
